# EUROPÄISCHE PATENTSCHRIFT

(11) **EP 1 572 500 B1**
(45) Veröffentlichungstag und Bekanntmachung des Hinweises auf die Patenterteilung: **24.01.2007**
(21) Anmeldenummer: 03795943.4
(22) Anmeldetag: 19.12.2003
(51) Int. Cl.: B60R 13/08, C08L 95/00, C08K 7/02, C08L 99/00, C08L 101/00

(54) **DÄMPFUNGSMATERIAL UND VERFAHREN ZU DESSEN HERSTELLUNG**
DAMPING MATERIAL AND METHOD FOR THE PRODUCTION THEREOF
MATERIAU D'AMORTISSEMENT ET SON PROCEDE DE PRODUCTION

(30) Priorität: 20.12.2002 DE 10260922
(43) Veröffentlichungstag der Anmeldung: 14.09.2005
(73) Patentinhaber: Schmidt, Axel H., 65468 Trebur (DE)
(72) Erfinder: Schmidt, Axel H., 65468 Trebur (DE)
(74) Vertreter: Herden, Andreas F.
(86) Internationale Anmeldenummer: PCT/EP2003/014668
(87) Internationale Veröffentlichungsnummer: WO 2004/056613

(56) Entgegenhaltungen:
- WO-A-96/11980
- DE-A- 3 624 164
- DE-A- 4 436 981
- US-A- 5 028 266
- US-B1- 6 461 542

## Beschreibung

Die Erfindung betrifft ein Dämpfungsmaterial nach dem Oberbegriff des Anspruchs 1 sowie ein Verfahren zu dessen Herstellung nach dem Oberbegriff des Anspruchs 21.

Dämpfungsmaterial wird insbesondere im Kraftfahrzeugbau in Form von Dämpfungsmatten vielfältig eingesetzt. So sind z.B. eine Vielzahl von Metallblechteilen mit solchem Dämpfungsmaterial verbunden.

Die Komponenten des Grundstoffes, der betroffenen Gruppe von Dämpfungsmaterialien, bestehen in der Regel aus
- einem Bindemittel oder Bindemittelgemisch und
- einem oder mehreren Füllstoffen.

Als Bindemittel sind eine Vielzahl von Materialien und Materialgemischen bekannt. Z.B. wird in der Druckschrift DE 692 16 238 T2 eine Komposition aus Ethylen-Vinylacetat-Copolymeren und Erdölharz beschrieben.

Als Füllstoffe dienen z.B. Mineralien wie Basalt, Glimmer usw. und Stoffe, die die Verwendung der einbaufähigen Dämpfungsmatte erweitern, wie z.B. magnetisierbare Elemente. Außerdem können weitere, entsprechend dem spezifischen Anwendungsfall notwendige Zusätze im Füllstoff, wie oberflächenaktive Substanzen, Weichmacher etc. enthalten sein.

Derartige Dämfungsmaterialen bereiten aber in der Entsorgung und im Recycling Probleme und sind nachteiligerweise relativ schwer.

Das Gewicht der bekannten Dämpfungsmaterialien, die derzeit im Automobilbau verwendet werden, summiert sich bei einem Mittelklasseauto typischerweise auf etwa 25 kg, also immerhin etwa 2 % des Gesamtfahrzeuggewichts.

Nachteiligerweise erhöht sich durch das Gewicht des Dämpfungsmaterials unmittelbar der Kraftstoffverbrauch des Kraftfahrzeugs.

Auf der anderen Seite besteht im Zuge der stetig steigenden Kraftstoffpreise ein enormer Druck auf die Automobilindustrie hinsichtlich einer Gewichtsreduzierung.

Aus dem Dokument DE 38 13 984 A1 ist ein Verfahren zur Herstellung von formgepressten stoßdämpfenden Teilen bekannt, bei welchem Stroh durch Mahlen aufgespleißt/zerrieben wird und das gemahlene Stroh mit einem in Wasser gelösten Kleber vermischt wird. Das aus Stroh und Kleber bestehende Gemisch wird schließlich gepresst und der gepresste Formling getrocknet.

Beim dem Mahlvorgang entsteht jedoch in nachteiliger Weise Mehl, so dass es zu einer elektro-statischen Aufladung mit erheblicher Explosionsgefahr kommen kann.

Ein noch gravierenderer Nachteil liegt jedoch darin begründet, dass eine wichtige positive Eigenschaft des Strohs, nämlich die Faserigkeit durch den Mahlvorgang zerstört wird.

Aus dem Dokument DE 196 41 588 A1 ist ein Dämmstoff bekannt, welcher mit einer Natron- oder Kalilauge gequollenes Stroh enthält und ggf. mit weiteren Zusätzen zu einem Formkörper verformt wird.

Dieser Dämmstoff hat aber den Nachteil, dass das Stroh durch das Aufquellen lediglich etwas weich und biegsam wird. Dies mag für den angesprochenen Anwendungsbereich im Bauwesen ausreichend sein, der Dämmstoff ist jedoch aufgrund der grundlegend anderen Anforderungen nicht für den Kraftfahrzeugbau geeignet.

Ferner ist aus dem Dokument DE 195 43 635 A1 ein Verbundwerkstoff aus Polyhydroxyfettsäuren und Fasermaterialien bekannt, welcher auch zur Herstellung von Formteilen im Automobilbereich vorgeschlagen wird.

Nachteilig ist hierbei jedoch, dass die vorgeschlagenen Formteile keine hinreichende Schwingungsdämpfung erzielen. Der ausgehende Schall wird nämlich nicht in seiner Entstehung unterbunden, so dass ein Dröhnen entstehen kann.

Die gattungsbildende Offenlegungsschrift DE 44 36 981 A1 offenbart einen Leichtbaukörper, der im Bauwesen zur Wärme- und Kälteisolierung etc. als horizontales- oder vertikales Dämmelement eingesetzt wird und aus einer Mischung nachwachsender cellulosehaltiger Stoffe mit einem mehrfunktionellem Isocyanatbindemittel, insbesondere Diphenylmethan-4,4'-diisocyanat, besteht.

In der ebenfalls gattungsbildenden Druckschrift DE 36 24 164 A1 wird ein Verfahren zur Herstellung von Wärme-, Schall- und/oder Stoß-Dämmschichten beschrieben, bei dem Recyclingstoffe aus nachwachsenden Rohstoffen wie Stroh, Holzwolle und/oder aus Wertstoffen wie Papier, Kunststoff, Geweben oder dergleichen geringer Wärmeleitfähigkeit ausgewählt, die ausgewählten Stoffe zerkleinert und die Stoffe einer Mischkammer zugeführt und dort mit einem Bindemittel solcher Dosierung miteinander vermischt werden, dass die Oberfläche der Stoffe mit dem Bindemittel benetzt sind und dann die benetzten Stoffe einem Formungs- oder Verfestigungsprozess unterworfen werden.

Folglich ist es eine Aufgabe der vorliegenden Erfindung, ein Dämpfungsmaterial bereit zu stellen, welches kostengünstig herzustellen, umweltverträglich ist und/oder ein geringes Gewicht aufweist.

Eine weitere Aufgabe der Erfindung ist es, ein Dämpfungsmaterial bereit zu stellen, welches gute Schall- und/oder Wärmeisolationseigenschaften besitzt und insbesondere eine schallunterbindende Schwingungs-/Vibrationsdämpfung mit verbesserter Anti-Dröhn-Wirkung aufweist.

Noch eine Aufgabe der Erfindung ist es, ein Dämpfungsmaterial bereit zu stellen, welches einfach und sicher verarbeitbar ist.

Noch eine weitere Aufgabe der Erfindung ist es, ein Dämpfungsmaterial bereit zu stellen, welches flexibel und gut formbar ist.

Es ist ferner eine Aufgabe der Erfindung ein Dämpfungsmaterial bereit zu stellen, welches die Nachteile herkömmlicher Materialien vermeidet oder zumindest mindert.

Die Aufgabe der Erfindung wird in überraschend einfacher Weise bereits durch den Gegenstand der unabhängigen Ansprüche gelöst. Vorteilhafte Weiterbildungen der Erfindung sind Gegenstand der Unteransprüche.

Erfindungsgemäß wird ein Grundstoff zur Herstellung eines Dämpfungsmaterials für Kraftfahrzeuge bzw. das Dämpfungsmaterial bereit gestellt, welcher zumindest ein Bindemittel, wobei Bindemittel auch ein Bindemittelgemisch umfasst, und zumindest einen oder mehrere Füllstoffe umfasst. Der Füllstoff enthält Stroh oder besteht aus Stroh. Es wird bevorzugt Stroh entweder einer Pflanzenart oder -sorte alleine oder eine Mischung daraus verwendet. Besonders bewährt haben sich Weizen- und Roggenstroh.

Ein besonderer Vorzug der Erfindung liegt in der Verwendung von aufgeschlossem Stroh, wobei unter Aufschließung des Strohs verstanden wird, dass der natürliche Faserverbund des Strohs zumindest teilweise aufgehoben wird.

Durch die Aufschließung wird in vorteilhafter Weise die natürliche Struktur des Strohs in Form von zu Strohhalmen verbundenen Strohfasern, also seine halmartige und versteifende Struktur zumindest teilweise aufgehoben.

Durch die Aufschließung des Strohs werden mit anderen Worten die Strohfasern aus welchen die Strohhalme mittels eines natürlichen Bindemittels gebildet werden, aus diesem natürlichen Verbund der Strohhalme herausgelöst.

Der Halmverbund, welcher durch eine natürliche Pentosan-, Lignin- und/oder Zellulose-Bindung der Strohfasern zu Strohhalmen gebildet wird, wird beim Aufschließen dahingehend gelöst, dass diese natürliche Struktur des Strohs in Form von zu Strohhalmen verbundenen Strohfasern zumindest teilweise aufgelöst wird.

Zum Aufschließen des Strohs wird dieses insbesondere unter Druck bei einer Temperatur von 80° C bis 150° C oder höher, z.B. in einem Dampfdruckkessel gekocht.

Das Auslösen dieser Bestandteile hat in dem Dämpfungsmaterial den Vorteil, dass ein Abtropfen im Überkopfbereich verhindert werden kann und erhöht überdies die Dämpfung des Materials.

Das aufgeschlossene Stroh hat den Vorteil, dass einerseits die ursprünglich oder natürlich vorhandene Steifigkeit des Strohs aufgehoben oder zumindest verringert ist und andererseits die Faserigkeit erhalten bleibt, wodurch ein hervorragend weiterverarbeitbares, formbares und dennoch stabiler Dämpfungswerkstoff geschaffen wird.

Darüber hinaus zeichnet sich das erfindungsgemäße Dämpfungsmaterial durch eine einfache Herstellbarkeit sowie sehr gute Eigenschaften der akustischen Dämpfung, insbesondere Körperschalldämpfung und der Schwingungs-/Vibrationsdämpfung bei geringst machbarem Gewicht aus.

Das erfindungsgemäße Dämpfungsmaterial kann ferner auch für Schienenfahrzeuge, Flugzeuge, Schiffe, Fahrstühle oder andere Fortbewegungsmittel sowie für Gebrauchsgegenstände aller Art verwendet werden. Mit dem Grundstoff bzw. dem Dämpfungsmaterial können darüber hinaus Räumlichkeiten oder Orte wie z.B. Studios, Konzerthallen und/oder Gebäude, insbesondere Fabrikgebäude o.ä. schallgedämmt werden. Auch eine Verwendung von Stroh in Schweissbahnen zur Wand- oder Dachisolierung ist gegeben.

Insbesondere werden gemäß der Erfindung die bisher bekannten und verwendeten Füllstoffe durch Stroh, z.B. teilweise oder vollständig, ersetzt oder ergänzt. Füllstoffe die dem Dämpfungselement besondere, dem Anwendungsfall entsprechende Eigenschaften verleihen, bleiben in Bezug auf den Stand der Technik vorzugsweise erhalten.

Insbesondere werden aus dem erfindungsgemäßen Dämpfungsmaterial Dämpfungsmatten für den Kraftfahrzeugbau hergestellt.

Stroh ist ein seit Urzeiten vom Menschen verwendeter Rohstoff, der in der heutigen Zeit allerdings fast wieder in Vergessenheit geraten ist und kaum noch genutzt wird. Schlimmer noch, Stroh wird häufig außerhalb Westeuropas sogar mutwillig verbrannt oder man läßt es verrotten, da es bislang keine ausreichende Verwendung fand. Dem kann die vorliegende Erfindung Abhilfe verschaffen.

Besonders vorteilhaft hervorzuheben ist, dass es sich bei Stroh um einen nachwachsenden Rohstoff handelt, so dass die Herstellung höchsten Umweltschutzansprüchen genügt. Darüber hinaus ist Stroh und bevorzugt der erfindungsgemäße Grundstoff und das daraus hergestellte Dämpfungsmaterial natürlich verottbar oder verbrennbar, so dass auch bei der Entsorgung die Umweltbelastung sehr gering gehalten werden kann. Auch ein besonders umweltschonendes Recycling des Dämpfungsmaterials ist möglich.

Aber auch die technischen Vorteile von Stroh als Füllstoff zur Herstellung des erfindungsgemäßen Grundstoffes bzw. des Dämpfungsmaterials sind erheblich. Stroh zeichnet sich durch ein geringes, insbesondere gegenüber bekannten Füllstoffen wesentlich verringertes spezifisches Gewicht, bzw. eine verringerte Dichte aus. Dieser Gewichtsvorteil bleibt auch dann erhalten, wenn, wie dies insbesondere vorgesehen ist, das Stroh aufgeschlossen wird, um die Eigenschaften des Dämpfungsmaterials zu verbessern.

Vorzugsweise weist das ggf. vor dem Vermischen mit dem Bindemittel gepresste Stroh bzw. das Dämpfungsmaterial eine Dichte von kleiner oder gleich 2000 kg/m³, bevorzugt kleiner oder gleich 1000 kg/m³, besonders bevorzugt kleiner oder gleich 500 kg/m³ und am meisten bevorzugt im Bereich von 280 kg/m³ ± 50 % oder ± 25 % auf. Im Vergleich dazu weisen Basalt (2600 bis 2800 kg/m³) oder Schiefer (2600 bis 2700 kg/m³) eine erheblich höhere Dichte auf.

Das reduzierte Gewicht gegenüber den herkömmlichen Materialien führt zu einer unmittelbaren und umweltfreundlichen Reduzierung des Kraftstoffverbrauchs des Fahrzeugs in dem das Material eingesetzt wird.

Daher wird vorzugsweise, bezogen auf das Gesamtvolumen, ein maximaler Stroh-Füllstoffanteil, in Abhängigkeit des Einsatzgebietes angestrebt.

Weiter zeichnet sich das erfindungsgemäße Dämpfungsmaterial durch eine hohe Schallisolation bzw. Schallabsorption über einen weiten Frequenzbereich aus.

Bevorzugt wird der Füllstoff, genauer das Stroh vor der Vermischung mit dem Bindemittel einer Vorbehandlung unterzogen. Diese Vorbehandlung umfasst zunächst eine Reinigung, falls notwendig. Danach, insbesondere vor dem Aufschließen kann das Stroh zusätzlich in Partikel zerkleinert oder zerteilt werden, z.B. durch Schneiden, Häckseln bzw. Schroten und zwar derart dass die Strohfasern eine gegenüber der natürlichen Länge eine verkürzte Länge aufweisen. Alternativ zu dem Aufschließen genügt für manche Anwendungen aber sogar lediglich ein Häckseln oder Schroten des Strohs.

Häckseln bzw. Schroten haben gegenüber Mahlen grundsätzlich die großen Vorteil, dass wenig oder kaum feines Mehl entsteht, so dass die elektrostatische Aufladung des Füllstoffes sehr gering ist.

Anschließend wird das Stroh vorzugsweise gegen Fäulnis und/oder Entflammbarkeit imprägniert und/oder nachfolgend getrocknet.

Gemäß einer vorteilhaften Weiterbildung der Erfindung ist das Dämpfungsmaterial thermisch oder heiß aufschmelzbar. Zu diesem Zweck werden z.B. ein thermisch aufschmelzbares Bindemittel, insbesondere aus Bitumen in Bau- oder Straßenbauqualität, Ethylen-Vinylacetat-Copolymeren und/oder fossile Harze verwendet und/oder weitere, grundsätzlich bekannte, heißschmelzende Bestandteile zugesetzt. Bevorzugte Aufschmelztemperaturen oder Erweichungspunkte liegen im Bereich von 70° bis 130° Celsius. Vorzugsweise wird das Dämpfungsmaterial zu einem Dämpfungselement weiterverarbeitet, welches nachfolgend mit einem zu dämpfenden Trägerteil durch Heißaufschmelzen verbunden wird.

In vorteilhafter Weise besitzt das Dämpfungsmaterial durch die Kombination des Strohs und des Bitumens besonders günstige Aufschmelzbarkeitseigenschaften.

Als besonders vorteilhaft hat sich ein Bindemittel erwiesen, welches Bitumen der Bauqualität von hochwertigen Dachschweißbahnen enthält. Dieses hat den Vorteil, dass auch synthetischer Kautschuk enthalten ist. Es hat sich diesbezüglich nämlich gezeigt, dass ein Bindemittel, welches, insbesondere synthetischen Kautschuk enthält, die erfindungswesentlichen Eigenschaften verbessert.

Das erfindungsgemäße Dämpfungsmaterial besitzt neben der guten Schallabsorption eine weitere vorteilhafte Eigenschaft, so dass durch die Erfindung ein Doppelnutzen entsteht. Vorteilhafterweise weist nämlich das erfindungsgemäße Dämpfungsmaterial auch eine gegenüber herkömmlichen Dämmstoffen verringerte Wärmeleitfähigkeit, d.h. eine hohe Wärmedämmung auf.

Die erhebliche Gewichtsreduzierung bei einer gleichzeitigen Verbesserung des Schallabsorptionskoeffizienten ist für nahezu alle Anwendungsfälle im Kraftfahrzeug möglich, z.B. im Dachbereich, d.h. in einer hängenden Überkopfposition, im Wandbereich, d.h. in einer vertikalen Position und im Bodenbereich, d.h. in einer liegenden Position.

Für die Dämpfung eines Bodenblechs oder des Kofferraums haben sich Partikelgrößen nach dem Häckseln bzw. Schroten von bis zu 6 mm Länge und 4 mm Durchmesser und bis zu 4 mm Breite besonders bewährt. Bei dieser Maximallänge der Fasern kann sich die Dämpfungsmatte beim Aufschmelzen der Bodenform eines typischen Automobils noch optimal anpassen. Bei Dämpfungsmatten für das Dach kann die Faserlänge entsprechend den geringeren Krümmungsradien größer sein. Insbesondere wird die Faserlänge an den minimalen Krümmungsradius des geplanten Einsatzgebietes des Dämpfungsmaterial angepasst.

Demgemäß weisen die Strohfasern bevorzugt eine Länge von kleiner oder gleich 100 mm, 50 mm, 25 mm, 10 mm oder 6 mm auf.

Hierbei hat der Erfinder festgestellt, dass sich die Halme, bzw. die Hohlrohrpartikel beim mechanischen Schneiden von Partikellängen kleiner als 30 mm unter Umständen teilen. Die Hohlrohr- oder Füllstoffpartikel zerfallen dabei insbesondere entlang ihrer Längsachse in zwei oder mehrere im wesentlichen hohlrohrsegmentförmige oder hohlzylindersegmentförmige Teilstücke.

Vorzugsweise wird ein Stroh eingesetzt, welches einen Rohfasergewichtsanteil von 15 % bis 75 %, vorzugsweise im Bereich von 45 % ± 15 Prozentpunkte, einen Ligningewichtsanteil von 10 % bis 40 %, vorzugsweise im Bereich von 25 % +/- 10 Prozentpunkte, einen Pentosangewichtsanteil von 0 % bis 40 %, vorzugsweise im Bereich von 20 % ± 10 Prozentpunkte und/oder einen Zellulosegewichtsanteil von 0 bis 60 %, vorzugsweise im Bereich von 30 % ± 15 Prozentpunkte aufweist.

Vorzugsweise enthält das Dämpfungsmaterial oder besteht aus folgenden Bestandteilen (in Volumenanteilen):

| | |
|---|---|
| Bitumen | 20 bis 60 %, |
| | vorzugsweise minimal, |
| Elastomere/Naturkautschuk | 0 bis 20 %, |
| | vorzugsweise 10 % |
| Stroh, geschrotet und/oder aufgeschlossen | 10 bis 80 %, |
| | vorzugsweise maximal |
| Kaolin/Ton | 0 bis 20 %, |
| | vorzugsweise minimal |
| Triethylphosphat | 1 bis 10 % |
| | vorzugsweise ca. 3 % |
| Ferritpulver | 5 bis 20 %. |

Insbesondere für die Anwendung im Dachbereich wird dem Dämpfungsmaterial ein Anteil an magnetisierbarem, insbesondere ferromagnetischem Material z.B. Ferritpulver zugesetzt, und zwar in dem Maße, dass die hergestellte Dämpfungsmatte vorläufig, aber selbstständig am Dach haftet, um anschließend durch Aufschmelzen endgültig mit dem Dach verbunden zu werden.

Durch das gegenüber herkömmlichen Dämmstoffen deutlich verringerte Gewicht der erfindungsgemäßen Dämpfungsmatte kann auch der Ferritgewichtsanteil zur Erzeugung der notwendigen magnetischen Haftkraft reduziert werden. Dies geht in vorteilhafter Weise mit einer Potenzierung der Gewichtsreduktion einher.

Es liegt ferner im Rahmen der Erfindung ein Verfahren zur Herstellung eines Dämpfungsmaterials durchzuführen, wobei ein Bindemittel und ein Füllstoff, welcher Stroh umfasst, bereit gestellt werden. Gegebenenfalls wird das Dämpfungsmaterial weiterverarbeitet, um an die entsprechende Anforderung angepasst zu sein.

Bevorzugte Weiterverarbeitungsschritte, welche insbesondere einzeln oder in Mehrzahl und/oder in der folgenden Reihenfolge durchgeführt werden, sind:
- Zerkleinern des Strohs oder Füllstoffes,
- Zerteilen oder Zerschneiden des Strohs oder Füllstoffes in Partikel,
- Häckseln des Strohs oder Füllstoffes in Partikel,
- Imprägnieren des Strohs oder Füllstoffes,
- Trocknen des Strohs oder Füllstoffes,
- Vermischen des zerkleinerten Strohs oder Füllstoffes mit dem Bindemittel zu einem Basismaterial,
- Zugeben von Kaolin und/oder Ton,
- Pressen, Gießen und/oder Walzen des Basismaterials,
- Formen des Basismaterials zu einem Dämpfungselement oder einer Dämfungsmatte und
- Heißverschmelzen des Dämpfungselements mit einem Trägerelement eines Kraftfahrzeugs.

Die Temperatur beim Vermischen beträgt vorzugsweise mindestens 60° C, besonders bevorzugt mindestens 80° C und/oder höchstens 250° C, besonders bevorzugt höchstens 140° C.

Im Folgenden wird die Erfindung anhand von Ausführungsbeispielen näher erläutert, wobei die Merkmale der verschiedenen Ausführungsbeispiele miteinander kombiniert werden können.

### Detaillierte Beschreibung von Ausführungsbeispielen der Erfindung

Das erfindungsmäßige Dämpfungsmaterial bzw. der Werkstoff besteht aus organischen und anorganischen Stoffen. Die einzelnen Komponenten des Dämpfungsmaterials variieren und sind abhängig von dem Verwendungszweck und dem Einsatzgebiet des Werkstoffes.

Versuche haben gezeigt, daß eine sorgfältige Auswahl und Komposition der Basiskomponenten die geforderten Zielvorgaben erbringen können.

Die folgenden Materialkompositionen wurden als vorteilhafte Beispiele aufgefunden, wobei die Angaben in Volumenprozent zu verstehen sind:

### Probe 1

| | |
|---|---|
| Bitumen, Straßenbauqualität | 55 % |
| Divinylstyrolthermoplast (DST) | 10 % |
| Stroh, geschrotet | 25 % |
| Kaolin | 7 % |
| Triehtylphosphat | 3 % |

### Probe 2

| | |
|---|---|
| Bitumen, Straßenbauqualität | 45 % |
| Chlorbutadien-Kautschuk | 10 % |
| Stroh, geschrotet | 35 % |
| Kaolin | 10 % |

### Probe 3

| | |
|---|---|
| Bitumen, Bauqualität | 40 % |
| Divinylstyrol-Kautschuk | 15 % |
| Stroh, geschrotet | 32 % |
| Kaolin | 10 % |
| Triethylphosphat | 3 % |

### Probe 4

| | |
|---|---|
| Bitumen, Bauqualität | 40 % |
| Styrol-Butadien-Kautschuk | 10 % |
| Stroh, geschrotet | 30 % |
| Kaolin | 10 % |
| Triethylphosphat | 3 % |
| Ferritpulver | 7 % |

Zur Herstellung der Proben 1 bis 4 wurde das Stroh gehäckselt oder geschrotet, wodurch, wie die Versuche zeigten, eine bessere Verrühr-/Verknetbarkeit mit den anderen Ingredienten erzielt wurde.

Beim Häckseln bzw. Schroten des Strohs wird es in kompakter, gebündelter Form durch eine rotierende Schnecke an deren Ende sich ein mit der Schnecke verbundenes, also auch rotierendes, Messer befindet, welches fest an einer Lochscheibe reibt und den Schneidvorgang durchführt. Es entstehen bei dem trockenen Stroh, durch den Schneidvorgang, aus den Halmen Partikel von 10 µm bis 5 mm Länge, die Breite ist auf maximal 2 mm reduziert. Es wurde das Stroh also vorzugsweise auf eine Faserlänge von zumindest 10 µm und/oder höchstens 5 mm zerkleinert.

Zur Mischung der Komponenten wurde eine Rühr-/Knetmaschine verwendet. In einem ersten Schritt wurden das Bitumen und der Kautschuk für eine Dauer von 3 bis 20 Min. gemischt. Danach wurden in einem zweiten Schritt die anderen Materialkomponenten für eine Dauer von 3 bis 30 Min. untergemischt. Die gewählte Drehzahl des Mischens variierte dabei zwischen 30 bis 90 Umdrehungen pro Minute.

Die Temperatur beim Mischen sollte beim ersten und/oder zweiten Schritt zwischen 100°C und 150°C, insbesondere im Bereich von 130° C liegen. Durch dieses Vorgehen wurden homogene Materialmischungen erzielt.

Ferner kann die Zeit des Vermischvorgangs reduziert werden, wenn die dem Bitumen zuzuführenden Materialien beim Einmischen bereits auf mindestens 60° C, vorzugsweise auf etwa 100° C vorgewärmt sind.

Während des Mischvorganges des Strohs mit den übrigen Bestandteilen, d.h. bei dem Rühren und Kneten bei ca. 130° C wird vermutet, dass hier bereits eine Miniaufschließung der Strohpartikel stattfindet. Ohne Anspruch auf Vollständigkeit oder Richtigkeit, wird hierbei von einer 20-prozentigen Aufschließung ausgegangen, was die überraschend guten Testwerte erklären würde.

Das so produzierte Probenmaterial wurde auf 2 mm Dicke kalandriert.

Zur Herstellung der im folgenden beschriebenen Proben 5 und 6 wurde die Materialkomponente Stroh aufgeschlossen ohne vorher geschrotet zu werden. Das Aufschließen kann allerdings auch in Kombination mit - genauer nach - dem vorstehend beschriebenen Häckseln oder Schroten, durchgeführt werden. Die Proben 5 und 6 bestehen aus:

### Probe 5

| | |
|---|---|
| Bitumen, Straßenqualität | 30 % |
| Divinylstyrol-Kautschuk | 10 % |
| Stroh, aufgeschlossen | 50 % |
| Kaolin | 7 % |
| Triethylphosphat | 3 % |

### Probe 6

| | |
|---|---|
| Bitumen, Bauqualität | 25 % |
| Chlorophen (CR) | 10 % |
| Stroh, aufgeschlossen | 48 % |
| Kaolin | 7 % |
| Triethylphosphat | 3 % |
| Ferritpulver | 7 % |

Zur Herstellung der Proben 5 und 6 wurde das natürliche Stroh, wie vom Feld angeliefert (ungehäckselt), in einer Wasser/Brennkalk-Lösung (Calziumoxyd(CaO)-Lösung) eingelegt und unter Verschluss und Druck gekocht und so in seine Bestandteile chemisch aufgeschlossen.

Insbesondere konnten damit das Lignin, Pentosan und/oder die Zellulose mit der Kalklösung ausgelöst werden.

Dadurch, dass insbesondere das Lignin die Strohfasern bindet und diese Bindung durch die Kalklösung in Verbindung mit dem Kochen verloren geht, erhält das Material eine verbesserte Formbarkeit.

Der Kochvorgang wurde durchgeführt bei 110°C und einem Druck von 10 bar und dauerte 4 Stunden. Das aufgeschlossene Stroh wurde feucht und mit einer Temperatur von 80°C bis 100°C der Materialmischung aus Bitumen und Kautschuk untergemischt. Im übrigen wurde wie bei den Proben 1 bis 4 verfahren.

Wenn bei den Proben 5 und 6 dem Bitumen das feuchte, tropfnasse, aufgeschlossene und auf etwa 100° C warme oder vorgewärmte Stroh zugeführt wird, wird eine kurze Wasserdampfbildung in Kauf genommen.

Das Verfahren und die Vorteile des Aufschließens, also des Zerlegen des Strohs in seine Bestandteile wird im folgenden noch genauer beschrieben.

Das Stroh wird, wie es vom Feld oder Zwischenlager kommt, in eine kochende Lösung Brenn-/Ätzkalk in Wasser natürlich völlig gelöst, gegeben. Der Kalkanteil beträgt vorzugsweise etwa ein Zehntel bis ein Halb des vollen Strohgewichtes der aufzuschließenden Charge.

Beim Eintauchen des Strohs in die kochende Flüssigkeit verliert das Stroh sofort seine Sperrigkeit, da das im Stroh enthaltene Lignin, das Pentosan und die Zellulose sofort den Aufschließungsprozess beginnen.

Der Erfinder hat ferner herausgefunden, dass während des Kochvorganges noch eine Kalk-Kieselsäure-Verbindung entsteht, die dem Dämpfungsmaterial später zusätzliche Festigkeit verleiht.

Die aufgeführten Materialkomponenten führen in allen Proben 1 bis 6 im Wesentlichen zu den folgenden Ergebnissen und Vorteilen.

Das Bitumen erlaubt, die Dämpfungsmatte auf das zu dämpfende Teil aufzuschmelzen, d.h. eine Verbindung zwischen Trägermaterial und Dämpfungsmatte zu schaffen, die nur mechanisch unter Zerstörung gelöst werden kann.

Die Elastomere bzw. der Naturkautschuk sorgen für eine verbesserte Fähigkeit des Dämpfungsmaterials Radien im Trägermaterial, während des Aufschmelzprozesses, zu folgen. Es wird also eine verbesserte Anpassungsfähigkeit erreicht. Die in den Beispielen aufgeführten Elastomere führen darüber hinaus zu einer Verbesserung der Verformungsfähigkeit, einer Reduzierung der Sprödigkeit und zu einer verbesserten Temperaturbeständigkeit gegen Hitze und Kälte.

Das Stroh in gehäckselter, geschroteter und/oder aufgeschlossener Form macht das Material leicht und sorgt für die guten Dämpfungseigenschaften.

Durch die geringere Dichte von Stroh von ca. 0,28 kg/dm³ gegenüber Bitumen von ca. 1 kg/dm³ ergibt sich eine erhebliche Gewichtsreduzierung. Die bei einem entsprechenden Anwendungsfall der Dämpfungsmatte, z.B. bei einer senkrechten oder Überkopf-Anbringung den Ferritpulveranteil entsprechend reduziert.

Die Beimischung von Kaolin und/oder Ton dämpft insbesondere Töne hoher Frequenz und das Stroh Töne niedriger Frequenz. Dadurch wird eine Kombinationswirkung dahingehend erzielt, dass mit der Mischung eine breite Frequenzspanne abgedeckt wird.

Es können bei 40°C Verlustfaktoren (loss factor) von η = 0,32 bis 0,44 oder sogar noch höher erreicht werden.

Die begrenzte Beimischung von Kaolin und/oder Ton führt weiter zur Verbesserung der thermischen Stabilität und der Vibrationsschwinguns-Dämpfung. Da es mit einer Dichte von ca. 2 kg/dm³ etwa doppelt so schwer wie das Bitumen ist, wird der Anteil vorzugsweise minimiert sein.

Triethylphophat macht das Dämpfungsmaterial schwer entflammbar. Dies sorgt für die Erfüllung internationaler Automobilstandards.
Der Partikel- und Faseranteil in dem Probenwerkstoff führte ebenfalls zu Ergebnissen, die die Anforderungen der Automobil-Industrie übererfüllen.

Durch das Aufschließen des Strohs und das tropfnasse beimischen enthält das Dämpfungsmaterial natürlich auch, neben dem Faseranteil, die Bestandteile Lignin, Pentosan, Zellulose und eine Kalzium-Kieselsäure Verbindung.
Alle diese Stoffe gehen offenbar mit anderen Bestandteilen des Dämpfungsmaterials eine besonders vorteilhafte Verbindung ein, wie Testergebnisse zeigten.

### Testergebnisse

Das erfindungsmäßige Dämpfungsmaterial gemäß der Proben 1 bis 6 wurde Tests unterzogen, wie sie die potentiellen Kunden, insbesondere die Automobilindustrie, verlangen.

| Anforderung | | Ergebnis |
|---|---|---|
| 1. Flächengewicht | | |
| a) unmagnetisch | < 2,5 kg/m² → | unterschritten |
| b) magnetisch | < 4,5 kg/m² → | unterschritten |
| 2. Dicke | 2,0 mm + 0,2 → | erfüllt |
| 3. Zugfestigkeit | > 25 N/mm² → | erfüllt |
| 4. Haftung magnetischer Probewerkstoffe | | |
| Ein Probekörper aus dem Dämpfungsmaterial mit einer Größe von 200 mm x 100 mm wird auf ein lackiermäßig vorbereitetes Automobilblech, der Maße 250 mm x 100 mm, mittig so angedrückt, daß 50 mm überlappen. Die Andruckkraft beträgt 5 N, gleichmäßig verteilt auf einer Überlappungsfläche 100 x 50 mm. Bei senkrechter Aufhängung des Prüfbleches darf der Probekörper nicht wandern und/oder abfallen: | | |
| | → | erfüllt |

Es ist dem Fachmann ersichtlich, dass die vorstehend beschriebenen Ausführungsformen beispielhaft zu verstehen sind.

## Patentansprüche

1. Dämpfungsmaterial, insbesondere zur Herstellung von
Dämpfungsmatten für Kraftfahrzeuge, umfassend zumindest ein Bindemittel und zumindest einen Füllstoff,
wobei der Füllstoff Stroh enthält, **dadurch gekennzeichnet, dass** das Stroh zumindest teilweise aufgeschlossen ist.

2. Dämpfungsmaterial nach Anspruch 1,
**dadurch gekennzeichnet, dass**
der natürliche Faserverbund des Strohs durch die Aufschließung des Strohs zumindest teilweise aufgehoben ist.

3. Dämpfungsmaterial nach Anspruch 1 oder 2,
**dadurch gekennzeichnet, dass**
die natürliche Struktur des Strohs in Form von zu Strohhalmen verbundenen Strohfasern durch die Aufschließung des Strohs zumindest teilweise aufgehoben ist.

4. Dämpfungsmaterial nach einem der vorstehenden Ansprüche, **dadurch gekennzeichnet, dass**
das aufgeschlossene Stroh aus Strohfasern gebildet ist, welche aus dem natürlichen Verbund der Strohhalme herausgelöst sind.

5. Dämpfungsmaterial nach einem der vorstehenden Ansprüche, **dadurch gekennzeichnet, dass**
die natürliche Struktur des Strohs in Form von zu Strohhalmen verbundenen Strohfasern durch eine zumindest teilweise Auflösung der natürlichen Pentosan-, Lignin- und/oder Zellulose-Bindung der Strohfasern in den Strohhalmen aufgelöst ist.

6. Dämpfungsmaterial nach einem der vorstehenden Ansprüche, **dadurch gekennzeichnet, dass** der Füllstoff gekocht ist.

7. Dämpfungsmaterial nach einem der vorstehenden Ansprüche, **dadurch gekennzeichnet, dass** das Bindemittel Bitumen enthält.

8. Dämpfungsmaterial nach einem der vorstehenden Ansprüche, **dadurch gekennzeichnet, dass**
das Stroh vor der Aufschließung in Partikel zerkleinert wurde, derart, dass die Strohfasern eine gegenüber ihrer natürlichen Länge verkürzte Länge aufweisen.

9. Dämpfungsmaterial nach einem der vorstehenden Ansprüche, **dadurch gekennzeichnet, dass**
die Strohfasern eine Länge von kleiner oder gleich 100 mm aufweisen.

10. Dämpfungsmaterial nach einem der vorstehenden Ansprüche, **dadurch gekennzeichnet, dass** der Füllstoff imprägniert ist.

11. Dämpfungsmaterial nach einem der vorstehenden Ansprüche, **dadurch gekennzeichnet, dass**
der Füllstoff mit einem Entflammbarkeitshemmer imprägniert ist.

12. Dämpfungsmaterial nach Anspruch 10,
**dadurch gekennzeichnet, dass**
der Entflammbarkeitshemmer Triethylphosphat enthält.

13. Dämpfungsmaterial nach einem der vorstehenden Ansprüche, **dadurch gekennzeichnet, dass**
der Füllstoff getrocknet und/oder auf bis zu 100°C temperiert ist.

14. Dämpfungsmaterial nach einem der vorstehenden Ansprüche, **dadurch gekennzeichnet, dass**
der Füllstoff gepresst ist.

15. Dämpfungsmaterial nach einem der vorstehenden Ansprüche, **gekennzeichnet durch** eine Dichte von kleiner oder gleich 2000 kg/m³.

16. Dämpfungsmaterial nach einem der vorstehenden Ansprüche, **dadurch gekennzeichnet, dass**
das Stroh einen Rohfaseranteil von 15 % bis 75 %, einen Ligninanteil von 10 % bis 40 %, einen Pentosananteil von 0 % bis 40 % und einen Zelluloseanteil von 0 bis 60 % aufweist.

17. Dämpfungsmaterial nach einem der vorstehenden Ansprüche, **gekennzeichnet durch** eine thermische Aufschmelzbarkeit.

18. Dämpfungsmaterial nach einem der vorstehenden Ansprüche, **gekennzeichnet durch** einen Anteil an magnetischem Material.

19. Dämpfungsmaterial, nach einem der vorstehenden Ansprüche, **dadurch gekennzeichnet, dass** das Stroh zumindest teilweise gehäckselt oder geschrotet ist.

20. Kraftfahrzeugdämpfungsmatte, herstellbar aus dem Dämpfungsmaterial gemäß einem der vorstehenden Ansprüche.

21. Verfahren zur Herstellung eines Dämpfungsmaterials, insbesondere für Kraftfahrzeuge und insbesondere gemäß einem der vorstehenden Ansprüche, wobei
ein Füllstoff, welcher Stroh enthält, und ein Bindemittel bereit gestellt werden,
**dadurch gekennzeichnet, dass** das Stroh dahingehend aufgeschlossen wird, dass der Faserverbund des Strohs zumindest teilweise aufgehoben wird und
das derart aufgeschlossene Stroh mit dem Bindemittel vermischt wird.

22. Verfahren nach Anspruch 21,
**dadurch gekennzeichnet, dass**
das Stroh zumindest solange gekocht wird, bis der Faserverbund des Strohs zumindest teilweise aufgehoben ist.

23. Verfahren nach einem der Ansprüche 21 bis 22, **dadurch gekennzeichnet, dass**
der Füllstoff Stroh gekocht wird und aus dem Kochvorgang direkt, mindestens tropfnass mit dem Bitumen/Kautschukgemisch verrührt wird.

24. Verfahren nach einem der Ansprüche 21 bis 23,
**dadurch gekennzeichnet, dass**
das Stroh vor dem Aufschließen gehäckselt wird.

25. Verfahren nach einem der Ansprüche 21 bis 24,
**dadurch gekennzeichnet, dass**
das Stroh zumindest so lange unter Druck gekocht wird, bis die natürliche Pentosan-, Lignin und/oder Zellulosebindung der Strohfasern in dem natürlichen Strohhalmaufbau zumindest teilweise aufgehoben ist.

26. Verfahren nach einem der Ansprüche 21 bis 25,
**dadurch gekennzeichnet, dass**
die Temperatur beim Mischen des Bindemittels und des Füllstoffs zwischen 80°C und 150°C beträgt.

27. Verfahren nach einem der Ansprüche 21 bis 26, ferner umfassend eine Weiterverarbeitung mittels zumindest eines oder mehrerer der folgenden Schritte:
- Zerkleinern des Füllstoffes,
- Imprägnieren des Füllstoffes,
- Trocknen des Füllstoffes,
- Vermischen des Dämpfungsmaterials mit weiteren Bestandteilen,
- Einmischen von Kaolin,
- Einmischen von Ton,
- Pressen, Gießen oder Walzen des Dämpfungsmaterials,
- Formen des Dämpfungsmaterials zu einem Dämpfungselement oder einer Dämpfungsmatte und
- Heißverschmelzen des Dämpfungselements bzw. der Dämpfungsmatte mit einem Trägerelement, insbesondere einem Kraftfahrzeugbauteil.

28. Verwendung von aufgeschlossenem Stroh als Bestandteil eines Dämpfungsmaterials für Fortbewegungsmittel, insbesondere Kraftfahrzeuge, Schienenfahrzeuge, Flugzeuge oder Schiffe.

## Claims

1. Damping material, especially for the production of damping mats for motor vehicles, comprising
at least one binding agent and
at least one filler material,
whereby the filler material contains straw,
**characterised in that** the straw is at least partially pulped.

2. Damping material according to claim 1,
**characterised in that**
the natural fibre binding of the straw is at least partially removed through the pulping process of the straw.

3. Damping material according to claim 1 or 2,
**characterised in that**
the natural structure of the straw in the form of straw fibres which are connected to form straw stalks is at least partially removed through the pulping of the straw.

4. Damping material according to one of the preceding claims,
**characterised in that**
the pulped straw is formed by straw fibres which have been removed from the natural binding of the straw stalks.

5. Damping material according to one of the preceding claims,
**characterised in that**
the natural structure of the straw in the form of straw fibres which are connected to form straw stalks is removed through an at least partial removal of the natural pentosan, lignin and / or cellulose binding of the straw fibres in the straw stalks.

6. Damping material according to one of the preceding claims,
**characterised in that**
the filler material is boiled.

7. Damping material according to one of the preceding claims,
**characterised in that**
the binding agent contains bitumen.

8. Damping material according to one of the preceding claims,
**characterised in that**
before pulping, the straw is reduced to particles in such a way that the straw fibres have a shorter length than their natural length.

9. Damping material according to one of the preceding claims,
**characterised in that**
the straw fibres have a length of less than or equal to 100 mm.

10. Damping material according to one of the preceding claims,
**characterised in that**
the filler material is impregnated.

11. Damping material according to one of the preceding claims,
**characterised in that**
the filler material is impregnated with a flammability inhibitor.

12. Damping material according to claim 10,
**characterised in that**
the flammability inhibitor contains triethylphosphate.

13. Damping material according to one of the preceding claims,
**characterised in that**
the filler material is dried and / or heated to 100°C.

14. Damping material according to one of the preceding claims,
**characterised in that**
the filler material is pressed.

15. Damping material according to one of the preceding claims,
**characterised by** a density of less than or equal to 2000 kg/cm³.

16. Damping material according to one of the preceding claims,
**characterised in that**
the straw has a raw fibre proportion of 15 to 75%, a lignin proportion of 10 to 40%, a pentosan proportion of 0 to 40% and a cellulose proportion of 0 to 60%.

17. Damping material according to one of the preceding claims, **characterised by** thermal fusability.

18. Damping material according to one of the preceding claims, **characterised by** a proportion of magnetic material.

19. Damping material according to one of the preceding claims,
**characterised in that**
the straw is at least partially chaffed or coarsely ground.

20. Motor vehicle damping mat which can be produced from the damping material according to one of the preceding claims.

21. Method for producing a damping material, particularly for motor vehicles, and particularly according to one of the preceding claims, wherein
a filler material containing straw, and a binding agent are made available,
**characterised in that** the straw is pulped so that the fibre binding of the straw is at least partially removed and
the thus pulped straw is mixed with the binding agent.

22. Method according to claim 21,
**characterised in that**
the straw is boiled at least until the fibre binding of the straw has been at least partially removed.

23. Method according to one of the claims 21 to 22,
**characterised in that**
the filler material straw is boiled and directly after the boiling process is mixed, at least dripping wet, with the bitumen / caoutchouc mixture.

24. Method according to one of the claims 21 to 23,
**characterised in that**
the straw is chaffed before pulping.

25. Method according to one of the claims 21 to 24,
**characterised in that**
the straw is boiled under pressure at least until the natural pentosan, lignin and / or cellulose binding of the straw fibres in the natural straw stalk structure has been at least partially removed.

26. Method according to one of the claims 21 to 25,
**characterised in that**
the temperature during the mixing of the binding agent and the filler material is between 80°C and 150°C.

27. Method according to one of the claims 21 to 26, also comprising further processing by means of at least one or more of the following steps:
- reduction in size of the filler material,
- impregnating of the filler material,
- drying of the filler material,
- mixing of the damping material with further constituent parts,
- mixing-in of kaolin
- mixing-in of clay
- pressing, casting or rolling of the damping material,
- shaping of the damping material into a damping element or a damping mat and
- thermal fusion of the damping element or the damping mat with a carrier element, especially a motor car component.

28. Use of pulped straw as a constituent part of a damping material for means of locomotion, especially motor cars, rail vehicles, aeroplanes or ships.

## Revendications

1. Matériau d'amortissement, destiné en particulier à la fabrication de nattes d'amortissement pour véhicules automobiles, comprenant au moins un liant et au moins une charge, laquelle charge contient de la paille, **caractérisé en ce que** la paille est au moins en partie désagrégée.

2. Matériau d'amortissement suivant la revendication 1, **caractérisé en ce que** l'assemblage naturel de fibres de la paille est au moins partiellement rompu par la désagrégation de la paille.

3. Matériau d'amortissement suivant la revendication 1 ou 2, **caractérisé en ce que** la structure naturelle de la paille sous forme de fibres de paille assemblées en chaumes est au moins partiellement rompue par la désagrégation de la paille.

4. Matériau d'amortissement suivant l'une des revendications précédentes, **caractérisé en ce que** la paille désagrégée est formée de fibres de paille qui sont libérées de l'assemblage naturel formant les chaumes.

5. Matériau d'amortissement suivant l'une des revendications précédentes, **caractérisé en ce que** la structure naturelle de la paille sous forme de fibres de paille assemblées en chaumes est désintégrée par une rupture au moins partielle de la liaison naturelle du pentosane, de la lignine et/ou de la cellulose des fibres dans les chaumes de paille.

6. Matériau d'amortissement suivant l'une des revendications précédentes, **caractérisé en ce que** la charge est portée à ébullition.

7. Matériau d'amortissement suivant l'une des revendications précédentes, **caractérisé en ce que** le liant contient du bitume.

8. Matériau d'amortissement suivant l'une des revendications précédentes, **caractérisé en ce que** la paille a été divisée en particules avant la désagrégation, de telle manière que les fibres de paille présentent une longueur raccourcie par rapport à leur longueur naturelle.

9. Matériau d'amortissement suivant l'une des revendications précédentes, **caractérisé en ce que** les fibres de paille ont une longueur inférieure ou égale à 100 mm.

10. Matériau d'amortissement suivant l'une des revendications précédentes, **caractérisé en ce que** la charge est imprégnée.

11. Matériau d'amortissement suivant l'une des revendications précédentes, **caractérisé en ce que** la charge est imprégnée d'un inhibiteur d'inflammabilité.

12. Matériau d'amortissement suivant la revendication 10, **caractérisé en ce que** l'inhibiteur d'inflammabilité contient du phosphate de triéthyle.

13. Matériau d'amortissement suivant l'une des revendications précédentes, **caractérisé en ce que** la charge est séchée et/ou équilibrée jusqu'à une température de 100°C.

14. Matériau d'amortissement suivant l'une des revendications précédentes, **caractérisé en ce que** la charge est comprimée.

15. Matériau d'amortissement suivant l'une des revendications précédentes, **caractérisé par** une masse volumique inférieure ou égale à 2000 kg/m³.

16. Matériau d'amortissement suivant l'une des revendications précédentes, **caractérisé en ce que** la paille contient une proportion de fibres brutes de 15 % à 75 %, une proportion de lignine de 10 % à 40 %, une proportion de pentosane de 0 % à 40 % et une proportion de cellulose de 0 à 60 %.

17. Matériau d'amortissement suivant l'une des revendications précédentes, **caractérisé par** une fusibilité thermique.

18. Matériau d'amortissement suivant l'une des revendications précédentes, **caractérisé par** une proportion de matière magnétique.

19. Matériau d'amortissement suivant l'une des revendications précédentes, **caractérisé en ce que** la paille est au moins partiellement hachée ou broyée.

20. Natte d'amortissement pour véhicules automobiles, pouvant être produite à partir du matériau d'amortissement selon l'une des revendications précédentes.

21. Procédé de production d'un matériau d'amortissement, en particulier pour véhicules automobiles, et en particulier selon l'une des revendications précédentes, dans lequel une charge qui contient de la paille et un liant sont tenus prêts, **caractérisé en ce que** la paille est désagrégée en ce sens que l'assemblage de fibres de la paille est au moins partiellement rompu et la paille ainsi désagrégée est mélangée avec le liant.

22. Procédé suivant la revendication 21, **caractérisé en ce que** la paille est maintenue à l'ébullition au moins jusqu'à ce que l'assemblage de ses fibres soit au moins partiellement rompu.

23. Procédé suivant l'une des revendications 21 à 22, **caractérisé en ce que** la charge de paille est maintenue à l'ébullition et, dès la fin de l'opération d'ébullition, elle est délayée directement, au moins mouillée et s'égouttant encore, avec le mélange de bitume et de caoutchouc.

24. Procédé suivant l'une des revendications 21 à 23, **caractérisé en ce que** la paille est hachée avant la désagrégation.

25. Procédé suivant l'une des revendications 21 à 24, **caractérisé en ce que** la paille est maintenue à l'ébullition sous pression au moins jusqu'à ce que la liaison naturelle du pentosane, de la lignine et/ou de la cellulose des fibres de paille dans la structure naturelle des chaumes de la paille ait été au moins partiellement rompue.

26. Procédé suivant l'une des revendications 21 à 25, **caractérisé en ce que** la température lors du mélange du liant et de la charge s'élève entre 80°C et 150°C.

27. Procédé suivant l'une des revendications 21 à 26, comprenant en outre un traitement subséquent impliquant au moins une ou plusieurs des étapes suivantes :
- division de la charge,
- imprégnation de la charge,
- séchage de la charge,
- mélange du matériau d'amortissement avec d'autres composants,
- incorporation de kaolin,
- incorporation d'argile,
- pressage, coulée ou compactage au rouleau du matériau d'amortissement,
- formage du matériau d'amortissement pour produire un élément d'amortissement ou une natte d'amortissement, et
- assemblage par fusion à chaud de l'élément d'amortissement ou de la natte d'amortissement avec un élément de support, en particulier un élément de construction de véhicule automobile.

28. Utilisation de paille désagrégée comme constituant d'un matériau d'amortissement pour moyens de déplacement, en particulier pour véhicules automobiles, véhicules ferroviaires, aéronefs ou navires.
